# EUROPEAN PATENT APPLICATION

(11) **EP 2 207 105 A1**
(43) Date of publication of application: **14.07.2010**
(21) Application number: 09305018.5
(22) Date of filing: 09.01.2009
(51) Int. Cl.: G06F 17/27, G06F 17/21, G06F 17/30

(54) **A method for visualizing a text, corresponding device, storage means, and software program therefor**

(71) Applicant: Alcatel Lucent, 75008 Paris (FR)
(72) Inventor: Geerts, Marjan, 2940, Stabroek, Antwerp (BE); Van Herreweghe, Hans, 2970, Schilde, Antwerp (BE); Lou, Zhe, 2000, Antwerp (BE)
(74) Representative: Brose, Gerhard

(57) **Abstract**

The invention concerns a method (100) for visualizing a text, the method comprising the steps of receiving (101) the text as input, generating (102) a list of phrases contained in the text, and for a first phrase contained in the list, determining (103) a frequency of occurrence of the first phrase, determining (104) a relation between the first phrase and a second phrase contained in the list by means of a dictionary and, based on the frequency of occurrence and the relation, creating (105) a symbolic representation of the text. The invention further concerns a corresponding device, storage means, and software program therefor.

## Description

The invention relates to a method for visualizing a text according to the preamble of claim 1, a programmable device according to the preamble of claim 8, storage means according to the preamble of claim 9, and a software program according to the preamble of claim 10.

A mind map is a diagram used to represent words, ideas, tasks, or other items linked to and arranged in a radial fashion around a central key word or idea. Mind maps are used to generate, visualize, structure, and classify ideas, and as an aid in study, organization, problem solving, decision making, and writing.

The elements of a given mind map are arranged intuitively according to the importance of the concepts, and are classified into groupings, branches, or areas, with the goal of representing semantic or other connections between portions of information. Mind maps may also aid the recall of existing memories.

By presenting ideas in a graphical, non-linear manner, mind maps are employed in the art to encourage an unorthodox brain-storming approach that can generate ideas without regard for a more formal, hierarchical organization system.

"The Mind Map Book" by Tony Buzan, Penguin Books, 1996, is commonly cited as a fundamental introduction to mind mapping but is not available to us.

A downside of mind mapping is the effort required to generate an appropriate mind map from a given textual representation. A considerable workload is imposed by the extraction, hierarchical structuring, and spatial organization of the large amounts of information contained in written language. It is thus an object of the invention to provide an automatable and efficient approach to mind map generation given an arbitrary text input.

This object is achieved by a method according to claim 1, a programmable device according to claim 8, storage means according to claim 9, and a software program according to claim 10.

A main idea of the invention is to make use of a dictionary to determine mutual relationships between phrases contained in the input text and use these relations, along with a predetermined frequency of occurrence of the aforementioned phrases, to draw up a symbolic representation, preferably a mind map, of the text. Here, frequency is used in a statistical sense as the number of times that the phrase occurs in the text. In particular, use of the word "frequency" does not imply a periodicity of such occurrence.

Further developments of the invention can be gathered from the dependent claims and the following description.

In the following the invention will be explained further making reference to the attached drawing.

To visualize a text according to an embodiment of the invention, the text is received as text input. Subsequently, a list of phrases contained in the text is generated. Then, for a first phrase contained in the generated list, a frequency of occurrence of that first phrase is determined. Further, a relation between the first phrase and a second phrase that is also contained in the list is determined by means of a dictionary. Finally, based on the frequency of occurrence and the relation thus determined, a symbolic representation of the text is created. In this context, by visualization is meant any technique for creating images, diagrams, or animations to communicate a message based on the given text.

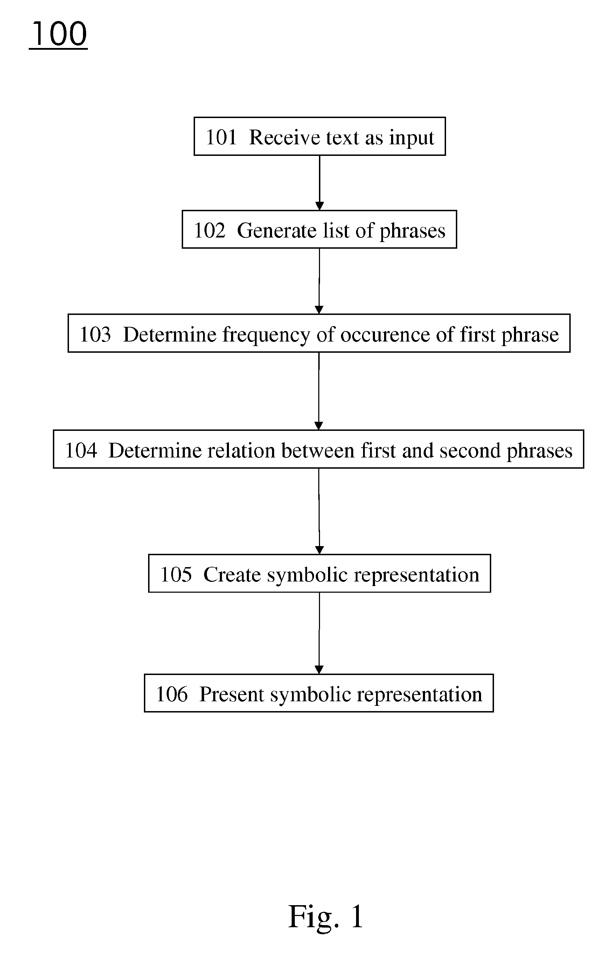

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, a forth step 104, a fifth step 105, and a sixth step 106, mutually connected by arrows indicating a preferred order of execution.

To allow its execution by means of a programmable device, the method of Fig. 1 is implemented in the form of a software program.

In the first step 101, the software program receives a text as input. To relieve the software program from further processing, the text takes the form of plain text, that is, an unformatted sequential file readable as textual material. The characters constituting the text may be mapped using a code such as the American Standard Code for Information Interchange (ASCII), ISO/IEC 646, the Extended Binary Coded Decimal Interchange Code (EBCDIC), or Unicode. As a further benefit, the use of plain text enables a user of the software program to create the text by means of a simple text editor such as Microsoft Notepad.

To allow for a more tightly integrated user experience, an alternative embodiment may make use of a textual or graphical user interface to receive the text interactively by means of a peripheral input device such as a keyboard or scanner.

In the second step 102, the software program generates a list of phrases contained in the text received in the first step 101. Used here in its grammatical sense, by phrase is meant a word or group of words that functions as a single unit in the syntax of a sentence of the text. Taking the English language as an example, the resulting list may comprise entries such as noun phrases, verb phrases, adjectival phrases, adverbial phrases, prepositional phrases, and postpositional phrases. Where the text of the first step 101 is provided in a natural language other than English, the list may, without deviating from the spirit of the invention, be constituted by types of phrases not covered in the above classification.

To limit the list to concepts of special significance, the software program filters the phrases for keywords, sometimes labeled key phrases. According to the term's definition in corpus linguistics, by keyword is meant a word that occurs in a text more often than might be expected by chance alone. The software program identifies keywords by carrying out a statistical, e.g., log-linear, test, which compares the word frequencies in the text against their expected frequencies. These expected frequencies are derived from a corpus employed as a reference for general language use of the respective words. In linguistics, by corpus or text corpus is meant a large and structured set of texts, now usually electronically stored and processed, for statistical analysis. To carry out the aforementioned test, the software program takes into account grammatical agreement between different parts of the text, that is, changes in form of a word depending on a related word. Grammatical agreement is sometimes referred to as concordance. Ant-Conc is an example of a state-of-the-art concordance program that is also capable of calculating keywords of a given text.

To avoid the inclusion of insignificant phrases when filtering the text for keywords, the software program further takes into account a black list of words such as articles, adverbs, and auxiliary verbs that tend to possess a high frequency of occurrence but little or no conceptual relevance. Such words, when encountered while scanning the text of the first step 101, are skipped and ignored by the software program.

To further personalize the list thus generated, the software program makes use of a profile of the end user for whom the visualization is derived. By personalization is meant the tailoring of the list to the user based on personal details or characteristics that he or she provides, for example, in the form of a configuration file. Such personalization may be effected by filtering the list according to additional criteria, such as areas of interest to the end user at hand. The selection of these criteria does not necessarily need to be based on individual user accounts as is conventional; it can also be based on a region or language of the end user, which technique is also referred to as localization.

In the third step 103, the software program determines, for a first phrase contained in the list of the second step 102, a frequency of occurrence of that first phrase. For this purpose, and to associate each phrase in the list with its respective frequency, the list takes the form of a frequency list, wherein phrases are ordered based on their frequencies. To further classify the phrases according to their relative frequencies, the software program calculates a frequency class of each phrase. In computational linguistics, the frequency class of a phrase is defined using the base 2 logarithm of the ratio between its frequency and the frequency of the most frequent phrase. The most common phrase thus belongs to frequency class 0 (zero) and any phrase that is half as frequent belongs to class 1.

To further elucidate the significance of the most prominent phrases appearing in the frequency list, the software program makes use of a thesaurus. In accordance with the term's use in information technology, thesaurus here means a database or list of semantically orthogonal topical search keys. Thesaurus databases, typically created by international standards, are generally arranged hierarchically by themes and topics. Such a thesaurus places each term in context, allowing the software program to distinguish, for example, between "bureau" as a synonym to "office" and "bureau" in the meaning of a particular piece of furniture. The thesaurus employed may be general or specific to the domain of knowledge to which the text of the first step 101 pertains. ANSI/NISO Z39.19 defines a standard format for monolingual controlled vocabularies such as thesauruses.

More specifically, the software program uses the thesaurus to look up the first entries of the frequency list, i.e., those phrases with the highest frequency of occurrence. If the thesaurus provides a synonym for such a phrase, which synonym is also included in the frequency list, then the phrase and its synonym are consolidated into a single entry of the list. This goal is achieved by deleting the synonym from the list and adding its frequency of occurrence to that of the higher-ranking, original phrase. It is noted that such consolidation may require the frequency list to be re-sorted by moving the affected phrase to a new position in the list, depending on its accumulated frequency of occurrence. An additional benefit of this approach is the resulting refinement of the list of phrases, whose size is effectively reduced by combining each phrase with its synonyms.

In the forth step 104, the software program determines a relation between the first phrase of the third step 103 and a second phrase contained in the list of the second step 102. The software program employs a dictionary for this purpose. To allow the software program to draw associations between phrases that have not previously been encountered, the dictionary takes the form of a semantic lexicon. By semantic lexicon is meant a dictionary of phrases labeled with semantic classes, that is, a dictionary with a semantic network. Here, a semantic network is a network which represents semantic relations between the concepts associated with the phrases in the list. An example of a semantic lexicon for the English language is WordNet as described by Jordan Boyd-Graber, Christaine Fellbaum, Daniel Osherson, and Robert Schapire, in "Adding Dense, Weighted Connections to WordNet", published in "Proceedings of the Third International WordNet Conference".

To account for the use of different words in the text which have identical or similar meaning, the software program uses the above-mentioned lexicon to group the entries of the list into sets of phrases of similar meanings. Then, again by means of the lexicon, it determines the mutual semantic relation between these sets. Some of the most common semantic relations identified by the software program are meronymy (A is part of B, i.e. B has A as a part of itself), holonymy (A includes B, i.e. A has B as a part of itself), hyponymy or troponymy (A is subordinate of B; A is kind of B), hypernymy (A is superordinate of B), synonymy (A denotes the same as B), and antonymy (A denotes the opposite of B).

In the fifth step 105, the software program creates, based on the frequency of occurrence of the third step 103 and the relation of the forth step 104, a symbolic representation of the text of the first step 101. To be able to provide a pictorial, yet abstract representation of the text, the software program makes use of a diagram. More specifically, to visualize the keywords of the text in a structured manner, the diagram takes the form of a mind map. Upon creation of the mind map, the software program graphically connects these keywords according to the semantic relations identified in the forth step 104. To further refine the geometric arrangement of keywords relative to each other, the software program takes into account additional factors such as the relative proximity of the respective phrases in the original text.

Finally, in the sixth step 106, the software program presents the symbolic representation created in the fifth step 105 to a user of the software program. Since the diagram at hand is a mind map, the presentation takes the form of a visual display. To allow for an immediate visual reception by the user, the software program makes use of a display device, more specifically, an electronic display such as used in a computer monitor. If the software program comprises a graphical user interface as described in the first step 101, the presentation may take the form of a graphical component such as a window. In computing, by window is meant a visual area, usually rectangular in shape, displaying the output of the software program. To allow for additional user interaction, the graphical user interface may also allow the user to directly add to or manipulate the graphical elements of the displayed mind map. For instance, the software program may provide means for creating an image of the topic to which the text and resulting mind map relate. Further, the software program may allow to add symbols and codes to the mind map on display. Still further, users may be enabled to color or otherwise emphasize specific elements of the mind map. Finally, aspects pertaining to the geometric arrangement of graphical elements, such as the position of keywords or weight of the connecting lines, may be adapted. To persist the mind map thus manipulated, the software program includes the ability to save the resulting imagery to a storage medium under control of the software program, such as a magnetic disk.

Although the software program is preferably executed on a local workstation of the end user, an alternative embodiment may take the form of a web service to enable remote users to access the software program. A web service, according to the World Wide Web Consortium (W3C), is construed to mean a software system designed to support interoperable machine-to-machine interaction over a network. In this case, the software program is executed on a system remote from the end user, which system effectively hosts the requested web service. To allow participants of the Internet to make use of the software program, the service requester and service provider may communicate by means of the Hypertext Transport Protocol (HTTP). In this case, the network takes the form of a TCP/IP network.

If the software program takes the form of a web service, to make the created mind map available to a multitude of further end users, the web service may include web publishing capabilities. By web publishing is meant the dissemination of electronic media, typically allowing unrestricted access by other participants of the World Wide Web. A mind map thus published may be made available in the form of downloadable content, streaming media, or embedded in a web page.

The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. Alternatively, the method is implemented in hardware only, e.g. making use of an ASIC. The described embodiments are to be considered in all respects only as illustrative and not restrictive. Furthermore, the order of the steps for performing the invention is not critical, and as can be understood by those skilled in the art, the order may vary without departing from the scope of the invention.

The programmable device can be any kind of device which can be programmed including e.g. any kind of computer like a server or a personal computer, an FPGA, a processor, or the like, or any combination thereof, e.g. one processor and two FPGAs.

The storage means could be any kind of data repository in any storage medium such as a CD or disk, e.g. USB memory stick or any kind of memory, e.g. at least one RAM or ROM, or the like, or any combination thereof, e.g. one ROM and two RAMs, or two disks, etc.

The software program is a set of instructions which could have been created using JAVA, C, C++, HTML, LISP, or another programming language.

## Claims

1. A method for visualizing a text, the method comprising the steps of
receiving (101) the text as input,
generating (102) a list of phrases contained in the text, and
for a first phrase contained in the list, determining (103) a frequency of occurrence of the first phrase, **characterized in that** the method further comprises the steps of
determining (104) a relation between the first phrase and a second phrase contained in the list by means of a dictionary and,
based on the frequency of occurrence and the relation, creating (105) a symbolic representation of the text.

2. A method according to claim 1, **characterized in that** the creation (105) of the symbolic representation comprises the creation of a diagram, wherein the relation is symbolized by a geometric connection between the first phrase and the second phrase.

3. A method according to claim 2, **characterized in that** the creation of the diagram comprises the creation of a mind map, wherein the relation is symbolized by a graphical line between the first phrase and the second phrase.

4. A method according to claim 1, **characterized in that** the method further comprises the steps of, upon determining (103) the frequency of occurrence of the first phrase,
determining a further frequency of occurrence of the second phrase and
sorting the list based at least on the frequency of occurrence and the further frequency of occurrence.

5. A method according to claim 1, **characterized in that** the relation is determined (104) by means of a semantic lexicon.

6. A method according to claim 1, **characterized in that** the method further comprises the step of determining a relative proximity of the first phrase and the second phrase, wherein the creation (105) of the symbolic representation is further based on the relative proximity.

7. A method according to claim 1, **characterized in that** the method comprises the subsequent step of presenting (106) the symbolic representation to a user.

8. A programmable device comprising storage means with a software program recorded thereon, the software program comprising instructions which, when executed on the device, cause the device to carry out the steps of
receiving (101) a text as input,
generating (102) a list of phrases contained in the text, and
for a first phrase contained in the list, determining (103) a frequency of occurrence of the first phrase, **characterized in that** the instructions, when executed on the device, further cause the device to carry out the steps of
determining (104) a relation between the first phrase and a second phrase contained in the list by means of a dictionary and,
based on the frequency of occurrence and the relation, creating (105) a symbolic representation of the text.

9. Storage means having a software program recorded thereon, the software program comprising instructions adapted to perform, when the program is executed on a programmable device, the steps of
receiving (101) a text as input,
generating (102) a list of phrases contained in the text, and
for a first phrase contained in the list, determining (103) a frequency of occurrence of the first phrase, **characterized in that** the instructions are further adapted to perform, when the program is executed on the programmable device, the steps of
determining (104) a relation between the first phrase and a second phrase contained in the list by means of a dictionary and,
based on the frequency of occurrence and the relation, creating (105) a symbolic representation of the text.

10. A software program for visualizing a text, the software program comprising instructions for performing the steps of
receiving (101) the text as input,
generating (102) a list of phrases contained in the text, and
for a first phrase contained in the list, determining (103) a frequency of occurrence of the first phrase, **characterized in that** the software program further comprises instructions for performing the steps of
determining (104) a relation between the first phrase and a second phrase contained in the list by means of a dictionary and,
based on the frequency of occurrence and the relation, creating (105) a symbolic representation of the text.
